# EUROPEAN PATENT SPECIFICATION

(11) **EP 3 320 017 B1**
(45) Date of publication and mention of the grant of the patent: **04.08.2021**
(21) Application number: 16741144.6
(22) Date of filing: 29.06.2016
(51) Int. Cl.: C08G 63/183, C08J 11/24

(54) **PROCESS FOR THE PRODUCTION OF GLYCOL-MODIFIED POLYETHYLENE THEREPHTHALATE FROM RECYCLED RAW MATERIALS**
VERFAHREN ZUR HERSTELLUNG VON GLYCOLMODIFIZIERTEM POLYETHYLENTHEREPHTHALAT AUS RECYCLING-ROHSTOFFEN
PROCÉDÉ POUR LA PRODUCTION DE POLYÉTHYLÈNE TÉRÉPHTALATE MODIFIÉ PAR DU GLYCOL À PARTIR DE MATIÈRES PREMIÈRES RECYCLÉES

(30) Priority: 06.07.2015 IT UB20151922
(43) Date of publication of application: 16.05.2018
(73) Proprietor: Monte, Gianni, 33058 San Giorgio di Nogaro (Udine) (IT); Di Giacinto, Palmino, 64020 Castellalto (Teramo) (IT)
(72) Inventor: MONTE, Gianni, 33058 San Giorgio Di Nogaro (udine) (IT)
(74) Representative: Biggi, Cristina
(86) International application number: PCT/IB2016/053870
(87) International publication number: WO 2017/006217

(56) References cited:
- WO-A1-00/47659
- WO-A1-97/28211
- JP-A- 2000 191 766
- US-A1- 2009 239 009

## Description

### Technical field

The present invention relates to a process for the production of polyethylene terephthalate glycol-modified using recycled polyethylene terephthalate flakes as a raw material and a polyethylene terephthalate glycol-modified obtained from said process.

### State of the art

Polyethylene terephthalate (PET) is a polyester obtained by polycondensation of ethylene terephthalate, which is in turn obtained by esterification of terephthalic acid with ethylene glycol or else by transesterification between ethylene glycol and dimethyl terephthalate. It is a thermoplastic polymer that generally appears as an amorphous, transparent material, or as an opaque semicrystalline material.

PET is the most widely used polyester and has application in various sectors, from the production of films and fibers, to the packaging industry. In particular, as it is a material that is ductile, rigid and lightweight at the same time, and endowed with excellent properties as a barrier to gases and humidity, over the years it has become the plastic material of choice for the production of bottles for beverages and detergents.

The physical and mechanical characteristics of polyethylene terephthalate can be modified by copolymerization with diols other than monoethylene glycol, in order make the material suitable for specific applications. For example, it is possible to replace the ethylene glycol with variable amounts of longer chain glycols, such as, for example, 1,4-cyclohexanedimethanol (CHDM). These copolymers are known as polyethylene terephthalate glycol-modified (PETG), if the glycol replacing the ethylene glycol is less than 50% by weight relative to the total glycols present in the copolymer, and as polycyclohexylenedimethylene terephthalate (PCTG) if the monomeric units deriving from 1,4-cyclohexanedimethanol are greater than 50% by weight relative to the total glycols.

Introducing glycols other than ethylene glycol in the polymer chain has the effect of interfering with the rate of crystallization of the polymer, and/or reducing the melting temperature. For this reason, PETG can be used for the production of transparent products, also with large thicknesses, the production of sheets up to 8-10 mm thick, the production of rigid films (sheets or cast film) for thermoforming - in this specific case trays, blister packs, etc. - or the production of bi-oriented film.

In consideration of its vast use in different technological sectors, large amounts of polyethylene terephthalate waste are generated each year, in the order of millions of tons/year. Like all plastic materials, PET degrades very slowly, giving rise to waste management problems, which have been resolved by recycling this material.

PET packaging waste, consisting mainly of bottles and containers, is generally recycled by mechanical means. In recycling processes, PET post-consumer waste is first selected and divided by type, based on color; after that the material is washed with alkaline solutions and, finally, the macro contaminants (paper, metal, etc.) are removed. The waste is then reduced into flakes by grinding and subsequently treated to remove the micro-contaminants. The flakes are then further washed, dried and placed back on the market as a raw material. The mechanical processes for the recovery of PET normally generate a recycled polyethylene terephthalate (r-PET) which can be used to manufacture products that are not intended to come into contact with food, such as fibers for rugs and mats, strapping and non-food grade containers. Mechanically recycled r-PET can be used in the production of trays and baskets for fruit and vegetables, in the form of a rigid film or sheet, only if concealed by a functional barrier.

In order to obtain r-PET that is suitable for direct contact with food, the recycled PET must be further treated.

From a regulatory standpoint as well, r-PET intended for contact with food ("food-grade") must come from a certified source and must contain at least 95% by weight of post-consumer PET bottles used for food. Food-grade r-PET must be purified of any traces of contaminants; therefore, mechanical recycling is followed by melting and regranulation steps, during which the PET flakes are initially dried using high-temperature reactors and under vacuum to eliminate the volatile substances present. Subsequently, the flakes are extruded using equipment provided with high-vacuum degassing systems to eliminate the semi-volatile and undesirable substances absorbed by the material and the substances that form in the resin during the recycling steps (e.g. acetaldehyde, 2-methyl-1,3-dioxolane, limonene, etc.).

The r-PET thus produced is considered food grade and, under current legislation, can be used for the manufacture of products such as bottles or containers in contact with food, but only if diluted to 50% by weight with virgin PET.

An alternative to mechanical recycling is represented by chemical recycling of PET, which consists in depolymerizing the material to obtain the starting monomers, which, duly purified, can again be used to produce virgin PET. This type of process has had little application in the market, mainly due to the high plant operating costs, which limit profitability to plants of very large dimensions. A process for preparing a polyester polyol by the depolymerization of PET in the presence of a mixture of ethylene glycol and neopentyl glycol is known from JP 2000-191766.

An alternative to the reuse of post-consumer PET is represented, still today, by waste-to-energy incineration. This process, though it enables energy to be recovered from the combustion of the plastic material, significantly shortens its life cycle. In fact, PET can be mechanically or chemically recycled in order to be subsequently reintroduced into the production cycle a large number of times.

The Applicants have therefore addressed the problem of providing a new process for exploiting and reusing waste consisting of post-consumer polyethylene terephthalate, which makes it possible to lengthen the PET life cycle in an economically sustainable manner. The Applicants have solved said problem by developing a process for the production of polyethylene terephthalate glycol-modified according to the present invention.

### Summary of the invention

The invention relates to a process for the production of polyethylene terephthalate glycol-modified (r-PETG) comprising the following steps:
(1) depolymerization of recycled PET in the presence of a mixture comprising monoethylene glycol (MEG) and neopentyl glycol (NPG) in a weight ratio NPG/MEG comprised between 85:15 and 70:30, at a temperature of between about 190°C and about 260°C and at a pressure of between about 1 bar (about 0,1 MPa) and about 30 bar (about 3 MPa);
(2) polymerization of the reaction mixture of step (1) in the presence of a suitable catalyst, preferably at a pressure of less than about 0.01 mmHg (about 1,33 Pa).

A further object of the invention relates to a polyethylene terephthalate glycol-modified obtainable from the process of the invention (r-PETG), containing from 1.3 to 2% by weight of isophthalic acid inserted in the polymer chain, as well as an article containing said r-PETG.

### Brief description of the figures

The invention will be explained in detail below, also with reference to Figures 1-2, which show:
- Figure 1: DSC graph (differential scanning calorimetry) of the r-PETG obtained in the example according to the invention compared with the DSC graph of r-PET;
- Figure 2: DSC graph of the r-PETG obtained in the example according to the invention compared with the DSC graph of a virgin PETG.

### Detailed description of the invention

In the present description and in the appended claims, the percentages are to be understood as expressed by weight, unless specified otherwise. The present invention relates to a process for the production of polyethylene terephthalate glycol-modified (r-PETG) comprising the following steps:
(1) depolymerization of recycled PET in the presence of a mixture comprising monoethylene glycol (MEG) and neopentyl glycol (NPG) in a weight ratio NPG/MEG comprised between 85:15 and 70:30, at a temperature of between about 190°C and about 260°C and at a pressure of between about 1 bar (0,1 MPa) and about 30 bar (about 3 MPa);
(2) polymerization of reaction mixture of step (1) in the presence of a suitable catalyst, preferably at a pressure of less than about 0,01 mmHg (about 1,33 MPa).

In the process according to the invention, the reaction mixture of the depolymerization (or glycolysis) step (1) is sent directly to the polymerization step (2), without carrying out any separation and/or recovery of the monomers deriving from the depolymerization (or glycolysis).

Therefore, the process according to the present invention, in a variant thereof, can be characterized in that it does not comprise a step of separation and recovery of the monomers deriving from the depolymerization (or glycolysis).

In a further variant, the process of the invention can consist solely in the above-described steps (1) and (2).

Step (1) of the process of the invention comprises the depolymerization (or glycolysis) of recycled PET in presence of a mixture of MEG and NPG.

In the present description and in the appended claims, "recycled PET" or r-PET refers to the material resulting from the operations of mechanical recycling of post-consumer PET.

In the present description and in the appended claims, "post-consumer PET" refers to articles (bottles, containers, sheets, films, etc.) made by polyethylene terephthalate homopolymer and/or copolymer, as they appear after use by the end consumer.

In the present description and in the appended claims, "virgin PET" refers to PET containing exclusively monomers deriving from non-recycled raw materials.

In the present description and in the appended claims, "virgin PETG" refers to polyethylene terephthalate glycol-modified obtained from a process of polyesterification starting from monomers deriving from non-recycled raw materials, such as ethylene glycol, terephthalic acid (or dimethyl terephthalate) and 1,4-cyclohexanedimethanol.

In the present description and in the appended claims "virgin terephthalic acid" refers to terephthalic acid that is not derived from operations of recycling polymeric materials (e.g. PET).

The recycled PET that can be used in the process according to the invention has a variable composition and comprises materials containing polyethylene terephthalate homopolymer and/or copolymer. PET copolymers appear as PET in which the ethylene glycol present in the polymer chain is partially replaced with di-functional alcohols, such as, for example 1,4-cyclohexanedimethanol (CHDM), neopentyl glycol (NPG), diethylene glycol (DEG) and butandiol and/or in which the acid component is partially replaced with isophthalic acid.

Preferably, the recycled PET used in the process according to the invention is in the form of flakes, obtained with a process of mechanical recycling of post-consumer PET comprising the following steps:
- washing of the post-consumer PET with an alkaline aqueous solution containing 0.7-1.0 % by weight of NaOH, at a temperature of about 70°C;
- separation of the macro contaminants (plastic, metal, paper, etc.);
- grinding;
- washing with water and drying.

In order to improve the color of the r-PETG obtained from the process of the invention it is possible to use a mixture of r-PET of different colors, by mixing, for example, transparent colorless flakes with blue-colored flakes. The recycled PET used in the process according to the invention preferably has the physicochemical characteristics shown in Table 1.

**Table 1**

| | Unit of measure ment | |
|---|---|---|
| Apparent density | g/cm³ | ≥ 0.280 |
| Organic residue | ppm | < 100 |
| PVC | ppm | < 50 |
| Polyolefin | ppm | < 50 |
| Residual plastic contamination | ppm | < 50 |
| Residual non-plastic contamination | ppm | < 50 |
| Humidity | % | < 0.8 |
| Particle size (≤ 8mm and ≥ 2mm) | % | ≥ 95 |
| pH after washing | | 7.0 ± 1 |
| intrinsic viscosity | dl/g | 0.70 - 0.80 |
| IPA (isophthalic acid) | % | 1.2 - 2.0 |
| DEG (diethylene glycol) | % | 1.3 - 2.1 |
| CEG (final carboxyl groups) | % | 25 - 45 |
| Oligomers | % | ≤ 4.5 |

Moreover, the r-PET flakes used in the present process generally also contain residues of the polymerization catalysts used to produce the virgin PET, for example antimony, cobalt, manganese and phosphorous compounds. 95% by weight of the r-PET flakes that can be used in the process of the invention preferably have a particle size of between 2.0 and 8.0 mm. During step (1) of the process, the recycled PET is depolymerized in the presence of a mixture containing monoethylene glycol (MEG) and neopentyl glycol (NPG) in variable proportions by weight of NPG/MEG, at a temperature of between about 190° and about 260°C, a pressure of between about 1 bar (about 0,1 MPa) and about 30 bar (about 3 MPa) and in an atmosphere rendered inert with nitrogen. According to a first variant, in step (1) the r-PET is depolymerized in the presence of a mixture consisting solely of MEG and NPG in variable proportions.

The ratio by weight between the two components of the NPG/MEG mixture is extremely variable depending on the particle size of the flakes of the recycled PET to be depolymerized and depending on the characteristics of the r-PETG that it desired to obtain from the process.

The ratio by weight of NPG/MEG is comprised between 85:15 and 70:30.

Optionally, the depolymerization can be conducted in the presence of 15-200 ppm of a suitable catalyst known in the art, such as, for example, antimony, cobalt and tin compounds and ionic liquids of the type [bmim]Br, in order to promote glycolysis of the polyethylene terephthalate.

However, this process variant is less preferred, since the presence of a catalyst promoting depolymerization has an inhibitory effect on the next step (2) of the process, in which a polymerization reaction takes place. Therefore, according to a preferred variant of the process, the depolymerization step (1) is conducted in the absence of a catalyst. Optionally, during step (1), virgin terephthalic acid can be added to the mixture to favor the conversion of the glycols present in the mixture. Moreover, the addition of virgin terephthalic acid can lead to an improvement of the chromatic characteristics of the r-PETG obtained from the process.

The glycolysis of the recycled PET of step (1) can be total, i.e. the reaction can be conducted until the complete conversion of the r-PET into a mixture containing the esters of terephthalic acid with monoethylene glycol (e.g. bis(2-hydroxyethyl) terephthalate) and with the neopentyl glycol and mixed esters, or else, and preferably, until a partial conversion of the recycled PET.

According to this preferred variant, at the end of step (1) a complex reaction mixture is obtained which comprises, in addition to the non-reacted monoethylene glycol and neopentyl glycol, variable amounts of: esters of terephthalic acid with monoethylene glycol (MEG) and with neopentyl glycol (NPG), mixed esters of terephthalic acid with MEG and NPG, oligomers of ethylene terephthalate, oligomers of ethylene terephthalate copolymer and neopentyl glycol, with terephthalic acid, isophthalic acid, and mixtures of said oligomers.

During the depolymerization step (1), in fact, various reactions take place and they lead (simultaneously and/or consecutively) to glycolysis of the r-PET and replacement of the glycol present in the polymer chain with NPG. The depolymerization step (1) is interrupted when the amount of reacted NPG reaches a value that is established on the basis of the physicochemical characteristics of the final product: the content of NPG that is introduced into the polymer chain can vary depending on the physical characteristics of the r-PETG, which in turn depend on the final application for which the polymer is intended.

Step (1) has a duration preferably comprised between about 30 and about 240 minutes, more preferably between about 150 and about 180 minutes, depending on the dimensions (particle size) of the recycled PET subjected to depolymerization and the amount of heat provided.

The reaction mixture of step (1) is directly subjected to the polymerization step (2) after the addition of 15-150 ppm of a polymerization catalyst known in the art to promote the formation of polyethylene terephthalate, preferably selected from among compounds of lithium, germanium, cobalt, tin or manganese.

The polymerization reaction is conducted at a temperature preferably comprised between about 250° and about 290°C, under a high vacuum, at a pressure of less than about 0.01 mmHg (about 1,33 MPa).

In order to favor the formation of copolymers of polyethylene terephthalate containing neopentyl glycol, during step (2) the monoethylene glycol and optionally the residues of non-reacted NPG can be removed from the reaction environment by evaporation and condensation.

Moreover, according to one variant of the process, it is possible to add chain extenders during the polymerization step (2) to favor an increase in the viscosity of the polymer.

Step (2) can have a variable duration and is considered to have ended once the value of viscosity of the r-PETG it is desired to obtain has been reached. This value is in turn determined by the final application for which the r-PETG is intended (film, molding, etc.).

From an industrial viewpoint, the process can be conducted in a continuous or, preferably, discontinuous mode. According to this variant, the depolymerization step can be conducted in a reactor under pressure, in the presence of inert gas, optimized so as to set solid masses into motion at a low rpm. At the end of step (1) the melted reaction mixture can advantageously be filtered in a decanting step (for the removal of waste and high-melting materials) in a polymerization reactor where the subsequent polymerization will take place.

In this reactor, after the addition of the polymerization catalyst, the mixture is subjected to a high vacuum to eliminate the residual glycols. Once polymerization has been completed, the reactor can be pressurized again and the r-PETG can be extruded by means of a specific die directly on the outlet side of the reactor and cooled in a water bath. The polymer thus obtained can be cut with a special cutter in order to obtain final granules (pellets) of a hemispherical shape, which will preferably have a size of about 3.0x2.5x2.2 mm.

At the end of step (2) a reaction product called recycled polyethylene terephthalate glycol-modified (r-PETG) is obtained. The r-PETG obtainable from the process according to the invention has a complex composition that varies according to the composition of the recycled PET used as a raw material in the process. The composition of the r-PETG obtainable from the process according to the invention is thus substantially different from that of virgin PETG.

The subject matter of the invention thus further relates to a polyethylene terephthalate glycol-modified recycled (r-PETG) obtainable from the process according to the invention as previously described.

In particular, since the recycled PET used as a raw material generally also contains isophthalic acid, the r-PETG obtainable from the process of the invention contains variable amounts of isophthalic acid, from 1,3 - 2,0%, inserted in the polymer chain.

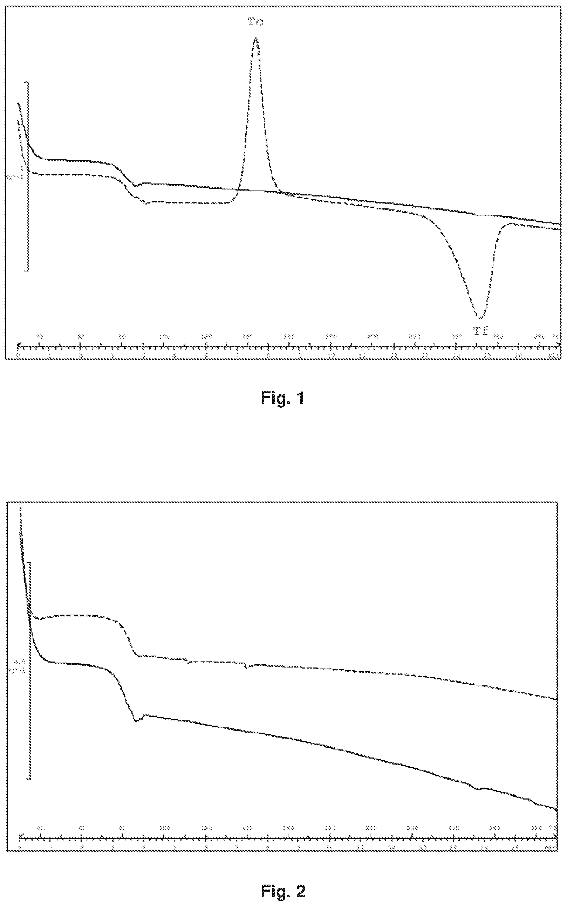

In addition, the r-PETG according to the invention is preferably characterized by at least one of the following properties:
- intrinsic viscosity of between about 0,70 and about 0,82 dl/g; and/or
- glass transition temperature (Tg) of about 76-82°C and/or
- absence of a crystallization and melting peak in the DSC thermogram, as shown, for example, by the graph in Figure 1.

According to a preferred variant of the invention, despite having a chemical composition that is different from the one of the virgin PETG, the r-PETG obtained from the process of the invention can present itself as a thermoplastic resin with physical and mechanical characteristics that are very similar to those of virgin PETG, which makes it suitable for use for the same applications. At room temperature said r-PETG appears as an amorphous transparent material, which can optionally be colored, and can be used for the manufacture of articles and products obtainable by injection molding, blow-molding, and stretch blow-molding, e.g. bottles and containers, or for the production of bi-orientated film or rigid film (sheets), also of large thickness.

In the preferred variant thereof, the process according to the invention thus enables the recycled PET to be converted into a material that can replace the virgin PETG in whole or in part, thereby achieving the double objective of lengthening the life cycle of the virgin PET - thus reducing the amount of waste destined for disposal in landfills - and of reducing the consumption of raw materials from non-renewable sources.

The present invention is illustrated below by means of the examples that are given in the experimental part, without limiting, however, the scope thereof.

### Analytical methods

The properties of the materials were determined using the following methods of analysis.

The requirements and test methods used for analyzing flakes according to standard UNI 10667-8, "Polyethylene terephthalate flakes for blow molding, from the recycling of post-consumer containers, part 8 requirements and test methods". This standard applies for secondary raw materials obtained by recycling PET post-consumer liquid containers and defines the requirements and test methods for r-PET polyethylene terephthalate flakes intended for the production of hollow bodies. The standard illustrates the methods for the determination of:
1. Oven test for PVC and polyethylene contamination and residual contamination (metal, cellulose and others).
2. Humidity;
3. Color;
4. Physical appearance;
5. Dimensions (ISO 565)

Moreover, the following methods were used to complete the characterization of both the r-PETG flakes and granules:
**Apparent density:** Method ASTM D 1895
**pH after washing:** 5,0 g of flakes is suspended in distilled water and the mixture is placed under stirring for a contact time of 5 minutes at room temperature. At the end of the contact time, an aliquot of water is taken and the pH is measured with a pH meter.
**IPA** (isophthalic acid): by HPLC, on both PET and r-PETG
**DEG** (diethylene glycol): by GC, on both PET and r-PETG
**CEG** (final carboxyl groups): dissolution in o-Cresol and titration with KOH 0,05N. Method used on both PET and r-PETG
**DSC:** according to standard ASTM D3418 - 15. The thermal analysis was carried out in the temperature interval of 30-290°C using a Mettler Toledo DSC 822 instrument and heating ramp of 15°C/min., nitrogen flow 10 ml/min, 40 µl pan (ME-26763), 10 mg of sample. The DSC analysis made it possible to evaluate the thermal characteristics of the polymers: the glass transition temperature (Tg), crystallization peak (Tc) and melting peak (Tf) in the first and second run.
**Intrinsic viscosity (IV):** according to standard ISO 1628, it was determined by dissolving the polymer in dichloroacetic acid (1% weight/volume), at 75°C in a dry bath. The analysis was performed using an Ubbelhode (Cap.II) capillary viscosimeter at 25°C.
**Color: according to standard ISO 6290-13,** it was determined in the pellet using a MINOLTA Spectrometer CM-3500D colorimeter according to the coordinates: CieLab illuminant D65 - 10° observer, quartz cell.
**Determination of free glycols in the mixture of step (1), internal method:** a sample of the mixture is taken by immersing a glass tube fitted with a suction system in the mass. The sample is discharged on a container previously covered with aluminum foil. An aliquot of the sample is dissolved at a temperature of 70°C in a suitable solvent containing 0.1g of 1.6-Hexanediol as an internal standard (ISTD). Upon dissolving completely, the solution is cooled to room temperature. Subsequently, an extraction in three portions is carried out with distilled H₂O. The quantitative determination was performed by comparison with a standard reference solution and by chromatographic gas analysis using a GC Agilent 7820, provided with a J&W DB-5 capillary column.

The following reagents were used in the process
MEG: monoethylene glycol (Sigma Aldrich, purity > 99.5%) code 03750
NPG: neopentyl glycol (Sigma Aldrich, purity > 99%) code 538256

### Equipment used:

**for glycolysis** - 2 liter 4-neck glass flask sn29/32, stirrer provided with a rod and Teflon vacuum seal system, 600W heater with an external system for controlling power, 50-350°C thermometers with conical connector, reflux condenser
**for polymerization** - distillation connector with Liebig refrigerant, Edwards high vacuum pump, vacuometer.

### Example 1

300 g of recycled PET flakes having the characteristics shown in Table 1 was placed in a glass flask with a 2 liter capacity, provided with a reflux condenser, in which 100 g of a MEG/NPG = 20/80 mixture was added.

The glycolysis step (1) was carried out in an inert nitrogen atmosphere at ambient pressure (1 bar - 0,1 MPa), by heating the reaction mixture to a temperature of about 210-220°C under gentle mechanical stirring (18-22 rpm). At the start of glycolysis, the mixture tends to thicken with the formation of compact lumps, until liquefying completely after about 50-70 minutes. In a temperature and reflux equilibrium of the glycols, after about 120 min. a first sampling was done to determine the residual amount of free glycols. Further samplings and analysis followed, until the desired quantity of free glycols was reached (14% of MEG and 9% of NPG, calculated in relation to the total mass). Glycolysis was interrupted after 160 min.

At the end of step (1), 80 ppm of a catalyst based on germanium salts and a phosphorous-based thermal protector, 0.8% by weight relative to the starting r-PET, were added to the reaction mixture. The reaction environment was subsequently brought to a pressure lower than or equal to 0.01 mmHg (1,33 Pa) by means of a vacuum ramp lasting about 30 min., and to a temperature of about 250°-270°C under mechanical stirring (about 150-170 rpm).

In order to favor the copolymerization of the NPG, the free MEG present in the reaction mixture was condensed and distilled.

During step (2) the molecular weight of the polymer increases rapidly; it is possible to visually evaluate the increase in the viscosity of the mass due to the difficulty of stirring. The r-PETG obtained appears a transparent solid that is slightly yellow-green in color.

Table 2 shows the results of the analyses performed on a sample of r-PETG obtained in the Example 1 and, by way of comparison, the analyses performed on a sample of commercially available virgin PETG.

**Table 2**

| | | r-PETG Ex. 1 | Virgin PETG |
|---|---|---|---|
| IV | dl/g | 0,732 | 0.815 |
| Color | L* | 59,6 | 69.0 |
| | a* | -3,6 | -0.4 |
| | b* | 8,6 | -1.7 |
| Acidit | meq/kg | 28 | 19 |
| Tg | °C | 77,02 | 81.4 |

Figure 1 shows the DSC graph of the r-PETG obtained in Example 1 (continuous line). The r-PETG has a glass transition temperature (Tg - midpoint) of 77,02°C, whereas the peaks corresponding to the crystallization (Tc) and melting (Tf) temperatures are wholly absent. By way of comparison, the same figure shows the DSC graph for the r-PET used as a raw material in Example 1 (broken line): the material undergoes a glass transition at a temperature of 78,53°C (Tg - midpoint). Moreover, one distinctly notes the peaks corresponding to the crystallization temperature (Tc - peak) at 136,24°C and melting temperature (Tf - peak) at 251,86°C.

Unlike the r-PET, the r-PETG obtained in the example of the invention neither crystallizes nor melts; it only softens at the glass transition temperature and the polymer becomes progressively more fluid with increases in temperature.

### Example 2

Under conditions analogous to the one described in Example 1, a further sample of r-PETG was obtained. Figure 2 shows a comparison between the DSC graph of the r-PETG obtained from the process of the invention (continuous line) and the DSC graph for the commercially available virgin PETG (broken line). Both polymers show an inflection in the thermogram in relation only to the glass transition temperature, which corresponds to 76,75°C for the r-PETG and 81,44°C for the virgin PETG (Tg - midpoint). Crystallization and melting peaks are absent from both graphs.

## Claims

1. A process for the production of polyethylene terephthalate glycol-modified (r-PETG) comprising the following steps:
(1) depolymerizing recycled PET in the presence of a mixture comprising monoethylene glycol (MEG) and neopentyl glycol (NPG) in a weight ratio NPG/MEG comprised between 85:15 and 70:30, at a temperature of between 190 °C and 260 °C and at a pressure of between 1 and 30bar (0,1 and 3 MPa);
(2) polymerizing the reaction mixture of step (1) in the presence of a suitable catalyst, preferably at a pressure of less than 0,01 mmHg (1,33 Pa).

2. The process according to claim 1, wherein the reaction mixture from depolymerization step (1) is directly subjected to polymerization step (2), without effecting any separation and/or recovery of the monomers deriving from the depolymerisation.

3. The process according to claim 1 or 2, wherein 95% by weight of the recycled PET flakes used in the process have a particle size of between 2,0 and 8,0 mm.

4. The process according to any one of claims 1 to 3, wherein depolymerization step (1) is conducted in the absence of catalyst.

5. The process according to any one of claims 1 to 4, wherein during depolymerization step (1) virgin terephthalic acid is added to the mixture.

6. The process according to any one of claims 1 to 5, wherein during step (2) monoethylene glycol and neopentyl glycol are removed from the reaction by evaporation and condensation.

7. The process according to any one of claims 1 to 6, wherein in polymerization step (2) 15-150 ppm of a polymerization catalyst, preferably selected from lithium, germanium, cobalt, tin or manganese compounds, is added.

8. Polyethylene terephthalate glycol-modified (r-PETG) obtained by the process according any one of claims 1-7, containing from 1.3 to 2% by weight of isophthalic acid inserted in the polymer chain.

9. Polyethylene terephthalate glycol-modified (r-PETG) according to claim 8, having a viscosity of between 0,70 and 0,82 dl/g said viscosity being measured by means of a capillarity viscosimeter according to standard ISO 1628, as described in the present specification; and/or a glass transition temperature of between 76 °C and 82°C said glass transition temperature being measure via DSC technique according to standard ASTM D3418-15, as described in the present specification;

10. An article comprising the r-PETG according to claim 8 or 9, wherein said article is obtained by injection molding, blow-molding, rigid film (sheet), bi-oriented film.

## Patentansprüche

1. Verfahren zur Herstellung von glykolmodifiziertem Polyethylenterephthalat (r-PETG), umfassend die folgenden Schritte:
(1) Depolymerisieren von recyceltem PET in Gegenwart einer Mischung, umfassend Monoethylenglykol (MEG) und Neopentylglykol (NPG) in einem Gewichtsverhältnis NPG/MEG zwischen 85:15 und 70:30, bei einer Temperatur zwischen 190 °C und 260 °C und bei einem Druck zwischen 1 und 30 bar (0,1 und 3 MPa);
(2) Polymerisieren der Reaktionsmischung von Schritt (1) in Gegenwart eines geeigneten Katalysators, vorzugsweise bei einem Druck von weniger als 0,01 mmHg (1,33 Pa).

2. Verfahren nach Anspruch 1, wobei die Reaktionsmischung aus dem Depolymerisationsschritt (1) direkt dem Polymerisationsschritt (2) unterzogen wird, ohne eine Abtrennung und/oder Rückgewinnung der aus der Depolymerisation stammenden Monomere zu bewirken.

3. Verfahren nach Anspruch 1 oder 2, wobei 95 Gew.-% der im Verfahren verwendeten recycelten PET-Flakes eine Teilchengröße zwischen 2,0 und 8,0 mm aufweisen.

4. Verfahren nach einem der Ansprüche 1 bis 3, wobei der Depolymerisationsschritt (1) in Abwesenheit von Katalysator durchgeführt wird.

5. Verfahren nach einem der Ansprüche 1 bis 4, wobei während des Depolymerisationsschritts (1) der Mischung reine Terephthalsäure zugesetzt wird.

6. Verfahren nach einem der Ansprüche 1 bis 5, wobei während Schritt (2) Monoethylenglykol und Neopentylglykol durch Verdampfung und Kondensation aus der Reaktion entfernt werden.

7. Verfahren nach einem der Ansprüche 1 bis 6, wobei im Polymerisationsschritt (2) 15-150 ppm eines Polymerisationskatalysators, vorzugsweise ausgewählt aus Lithium-, Germanium-, Kobalt-, Zinn oder Manganverbindungen, zugesetzt werden.

8. Glykolmodifiziertes Polyethylenterephthalat (r-PETG), erhalten durch das Verfahren nach einem der Ansprüche 1-7, enthaltend 1,3 bis 2 Gew.-% Isophthalsäure, die in die Polymerkette eingefügt ist.

9. Glykolmodifiziertes Polyethylenterephthalat (r-PETG) nach Anspruch 8, aufweisend eine Viskosität zwischen 0,70 und 0,82 dl/g, wobei die Viskosität mit einem Kapillarviskosimeter gemäß der Norm ISO 1628 gemessen wird, wie in der vorliegenden Spezifikation beschrieben; und/oder eine Glasübergangstemperatur zwischen 76 °C und 82 °C, wobei die Glasübergangstemperatur mittels DSC-Technik gemäß der Norm ASTM D3418-15 gemessen wird, wie in der vorliegenden Beschreibung beschrieben.

10. Artikel, umfassend das r-PETG nach Anspruch 8 oder 9, wobei der Artikel durch Spritzgießen, Blasformen, starre Folie (Platte), biorientierte Folie erhalten wird.

## Revendications

1. Procédé pour la production de polyéthylène téréphtalate modifié par du glycol (r-PETG) comprenant les étapes suivantes :
(1) dépolymériser du PET recyclé en présence d'un mélange comprenant du monoéthylène glycol (MEG) et du néopentyle glycol (NPG) dans un rapport pondéral NPG/MEG compris entre 85:15 et 70:30, à une température comprise entre 190 et 260 °C et à une pression comprise entre 1 et 30 bars (0,1 et 3 MPa) ;
(2) polymériser le mélange réactionnel de l'étape (1) en présence d'un catalyseur approprié, de préférence à une pression inférieure à 0,01 mmHg (1,33 Pa).

2. Procédé selon la revendication 1, dans lequel le mélange réactionnel de l'étape de dépolymérisation (1) est directement soumis à l'étape de polymérisation (2), sans effectuer de séparation et/ou de récupération des monomères issus de la dépolymérisation.

3. Procédé selon la revendication 1 ou 2, dans lequel 95 % en poids des flocons de PET recyclé utilisés dans le procédé ont une taille de particule comprise entre 2,0 et 8,0 mm.

4. Procédé selon l'une quelconque des revendications 1 à 3, dans lequel l'étape de dépolymérisation (1) est réalisée en l'absence de catalyseur.

5. Procédé selon l'une quelconque des revendications 1 à 4, dans lequel, au cours de l'étape de dépolymérisation (1), de l'acide téréphtalique vierge est ajouté au mélange.

6. Procédé selon l'une quelconque des revendications 1 à 5, dans lequel, au cours de l'étape (2), le monoéthylène glycol et le néopentyle glycol sont retirés de la réaction par évaporation et condensation.

7. Procédé selon l'une quelconque des revendications 1 à 6, dans lequel lors de l'étape (2) de polymérisation, il est ajouté 15 à 150 ppm d'un catalyseur de polymérisation, de préférence choisi parmi les composés de lithium, de germanium, de cobalt, d'étain ou de manganèse.

8. Polyéthylène téréphtalate modifié par du glycol (r-PETG) obtenu par le procédé selon l'une quelconque des revendications 1 à 7, contenant de 1,3 à 2 % en poids d'acide isophtalique introduit dans la chaîne polymère.

9. Polyéthylène téréphtalate glycol modifié (r-PETG) selon la revendication 8, ayant une viscosité comprise entre 0,70 et 0,82 dl/g, ladite viscosité étant mesurée au moyen d'un viscosimètre à capillarité selon la norme ISO 1628, comme décrit dans la présente spécification ; et/ou une température de transition vitreuse comprise entre 76 et 82 °C, ladite température de transition vitreuse étant mesurée par la technique ACD selon la norme ASTM D3418-15, telle que décrite dans la présente spécification.

10. Article comprenant le r-PETG selon la revendication 8 ou 9, dans lequel ledit article est obtenu par moulage par injection, moulage par soufflage, film rigide (feuille), film bi-orienté.
